# EUROPEAN PATENT APPLICATION

(11) **EP 1 408 639 A1**
(43) Date of publication of application: **14.04.2004**
(21) Application number: 02746000.5
(22) Date of filing: 12.07.2002
(51) Int. Cl.: H04L 1/16, H04L 1/00

(54) **TRANSMISSION APPARATUS AND RECEPTION APPARATUS**

(30) Priority: 13.07.2001 JP 2001214571
(71) Applicant: MATSUSHITA ELECTRIC INDUSTRIAL CO., LTD., Kadoma-shi, Osaka 571-8501 (JP)
(72) Inventor: FUTAGI, Sadaki, Ishikawa-gun, Ishikawa 929-0224 (JP); HIRAMATSU, Katsuhiko, Yokosuka-shi, Kanagawa 238-0031 (JP)
(74) Representative: Grünecker, Kinkeldey, Stockmair & Schwanhäusser Anwaltssozietät
(86) International application number: PCT/JP2002/007093
(87) International publication number: WO 2003/007532

(57) **Abstract**

A transmitting apparatus and a receiving apparatus that minimize a buffer's size without increasing the volume of data to memorize in the receiving apparatus. Data block making section 110 makes data blocks by dividing transmission on a per transmission unit basis. For each data block, CRC generating section 120 generates a CRC code, which is an error detection code. Transmitting section 130 transmits the data block multiplexing the CRC code upon the data block. RAM 140 temporarily memorizes the data block and the CRC code. Control signal receiving section 150 receives a control signal transmitted from receiving apparatus 200 to identify the next needed data block. When the control signal received in control signal receiving section 150 is one in request of the next data, control section 160 instructs transmission section 130 to send the next data block. When the control signal requests retransmission, an instruction is given to transmission section 130 to retransmit the data block and CRC code memorized in RAM 140.

## Description

### TECHNICAL FIELD

The present invention relates to transmitting apparatus and receiving apparatus. More particularly, the present invention relates to a transmitting apparatus and a receiving apparatus that detects or corrects data errors in data communication using error detection codes or error correction codes such as CRC codes.

### BACKGROUND ART

Japanese laid-open patent Publication No.2000-349853 discloses as prior art an example of a conventional transmitting apparatus and a receiving apparatus of the above type.

In data communications using conventional transmitting apparatus and receiving apparatus, a transmitting apparatus transmits data blocks in order, in which a sequence of information is divided into blocks and makes transmission data, to a receiving apparatus. The receiving apparatus memorizes the data blocks it receives in a buffer, and meantime performs error detection with each data block and, when an error is detected, issues a retransmission request to the transmitting apparatus for the data block in which error has been detected. The transmitting apparatus, upon receiving the retransmission request, retransmits the data block in which error has been detected.

Then, the receiving apparatus, upon receiving the data block without error, rearranges the data blocks temporarily memorized in the buffer in order such that the sequence of information is correctly restored, and thereafter memorizes them into, for instance, a large capacity memory element such as a flash memory.

However, conventional apparatus has a problem that, when there is a delay in error detection of a transmitted data block or when there is a delay in retransmitting a data block in which an error is detected, the volume of temporarily memorized data increases in a receiving apparatus, and the buffer size of the receiving apparatus needs to be made bigger.

### DISCLOSURE OF THE INVENTION

It is therefore one of the primary objects of the present invention to minimize the buffer size without increasing the volume of data that is temporarily memorized in a receiving apparatus.

The essence of the present invention lies in that a receiving apparatus receives a data block and memorizes it into a buffer on a temporary basis, and determines whether or not there is error in the data block. When there is no error, the receiving apparatus deletes the data block memorized in the buffer to prevent inefficient use of the buffer, and the transmitting apparatus transmits the next data block. On the other hand, when there is an error, the receiving apparatus performs a control such that the volume of data memorized in the buffer does not exceed a certain level, and the transmitting apparatus retransmits the data block in which the error is detected.

According to one aspect of the present invention, a transmitting apparatus comprises: a generating section that generates an error detection code from a data block, where transmission data is made into blocks for every unit of transmission; a memory section that memorizes the data block and the generated error detection code on a temporary basis; a transmission section that transmits the data block; an obtaining section that obtains information indicating whether or not the transmitted data block has an error; and a control section that operates in accordance with the obtained information, performing a control to retransmit the data block memorized in said memory section when there is an error in the transmitted data block, and, when there is no error, performing a control to erase a content in said memory section and transmit a next data block.

According to another aspect of the present invention, a transmitting apparatus comprises: a data block memory section that memorizes a data block on a temporary basis, where transmission data is made into blocks for every unit of transmission; an error detection code generating section that generates an error detection code from the data block; an error detection code memory section that memorizes the generated error detection code on a temporary basis; a transmission section that transmits the data block; an information obtaining section that obtains information indicating whether or not the transmitted data block has an error; and a control section that operates in accordance with the information obtained in said information obtaining section, performing a control to retransmit the data block memorized in said data block memory section when there is an error in the transmitted data block, and, when there is no error, performing a control to erase a content in said data block memory section and said error detection code memory section and transmit a next data block.

According to yet another aspect of the present invention, a receiving apparatus comprises: a receiving section that receives a data block; a memory section that memorizes the received data block on a temporary basis; an error detection code generating section that, referring to the data block memorized in said memory section, generates an error detection code by a same method as in a transmitting side; an information obtaining section that uses the generated error detection code and obtains information indicating whether or not the data block memorized in said memory section has an error; and a control section that, when the number of times said information obtaining section detects the error in the data block reaches a predetermined number of times, performs a control of data block input and/or output with respect to said memory section.

Yet another aspect of the present invention is a transmission method comprising the steps of: making and memorizing a data block, where transmission data is made into blocks for every unit of transmission; generating and memorizing an error detection code of the data block; transmitting the data block; and obtaining information that indicates whether or not there is an error in the data block stored on a temporary basis at a receiving side; and retransmitting the memorized data block when there is an error according to the obtained information, and, when there is no error, erasing the memorized data block and error detection code and transmitting the data block that is to be sent next.

Yet another aspect of the present invention is a reception method comprising the steps of: receiving and memorizing a data block; referring to the memorized data block and generating an error detection code by a same method used at a transmitting side; obtaining information indicating whether or not the memorized data block has an error by using the generated error detection code; controlling, when the number of times the error is detected in the data block reaches a predetermined number of times, input and/or output of data block.

Yet another aspect of the present invention is a data transmission method for use of a mobile communication system comprising a transmitting apparatus and a receiving apparatus, the method comprising the steps of: in said transmitting apparatus, making and memorizing a data block, where transmission data is made into blocks for every unit of transmission; in said transmitting apparatus, generating and memorizing an error detection code from the data block; in said transmitting apparatus, transmitting the data block and the error detection code to said receiving apparatus; in said receiving apparatus, receiving and memorizing the data block and the error detection code; in said receiving apparatus, referring to the data block memorized in said receiving apparatus and generating the error detection code by a same method as in said transmitting apparatus; in said receiving apparatus, detecting an error of the data block memorized in said receiving apparatus by comparing the received error detection code and the generated error detection code; and in said receiving apparatus, when there is no error in the data block memorized in said receiving apparatus, erasing said data block and making a request to said transmitting apparatus to transmit a next data block, and, when there is an error in the data block memorized in said receiving apparatus, keeping the number of times the error is detected and making a request to said transmitting apparatus to retransmit the data block when the number of times the error is detected is below a predetermined number of times, and erasing an oldest one of error containing data blocks stored in said receiving apparatus when the number of times the error is detected reaches the predetermined number of times.

Yet another aspect of the present invention is a data transmission method for use of a mobile communication system comprising a transmitting apparatus and a receiving apparatus, the method comprising the steps of: in said transmitting apparatus, making and memorizing a data block, where transmission data is made into blocks for every unit of transmission; in said transmitting apparatus, generating and memorizing an error detection code from the data block; in said transmitting apparatus, transmitting the data block to said receiving apparatus; in said receiving apparatus, receiving and memorizing the data block; in said receiving apparatus, referring to the data block memorized in said receiving apparatus and generating the error detection code by a same method as in said transmitting apparatus; in said receiving apparatus, transmitting the generated error detection code to said transmitting apparatus; in said transmitting apparatus, receiving the error detection code; in said transmitting apparatus, detecting information that indicates whether or not there is an error in the data block by comparing the received error detection code and the error detection code memorized in said transmitting apparatus; and in said transmitting apparatus, when there is an error according to the detected information, retransmitting the data block memorized in said transmitting apparatus, and, when there is no error, erasing the data block and the error detection code memorized in said transmitting apparatus and transmitting the data block that is to be sent next.

### BRIEF DESCRIPTION OF DRAWINGS

FIG. 1 is a block diagram showing a configuration of a transmitting apparatus and a receiving apparatus according to Embodiment 1 of the present invention;
FIG. 2A is a sequence diagram illustrating the operation of the transmitting apparatus and receiving apparatus according to Embodiment 1;
FIG. 2B is a continuation of FIG.2A;
FIG. 3 is a block diagram showing a configuration of a transmitting apparatus and a receiving apparatus according to Embodiment 2 of the present invention;
FIG.4A is a sequence diagram illustrating the operation of the transmitting apparatus and receiving apparatus according to Embodiment 2;
FIG.4B is a continuation of FIG.4A;
FIG.5 is a block diagram showing a configuration of a transmitting apparatus and a receiving apparatus according to Embodiment 3 of the present invention;
FIG. 6 shows a case where a data block is divided into n, and CRC codes corresponding to the top to each divided unit are generated;
FIG.7A is a sequence diagram illustrating the operation of the transmitting apparatus and receiving apparatus according to Embodiment 3; and
FIG. 7B is a continuation of FIG. 7A.

### BEST MODE FOR CARRYING OUT THE INVENTION

With reference to the accompanying drawings now, embodiments of the present invention will be described.

### (Embodiment 1)

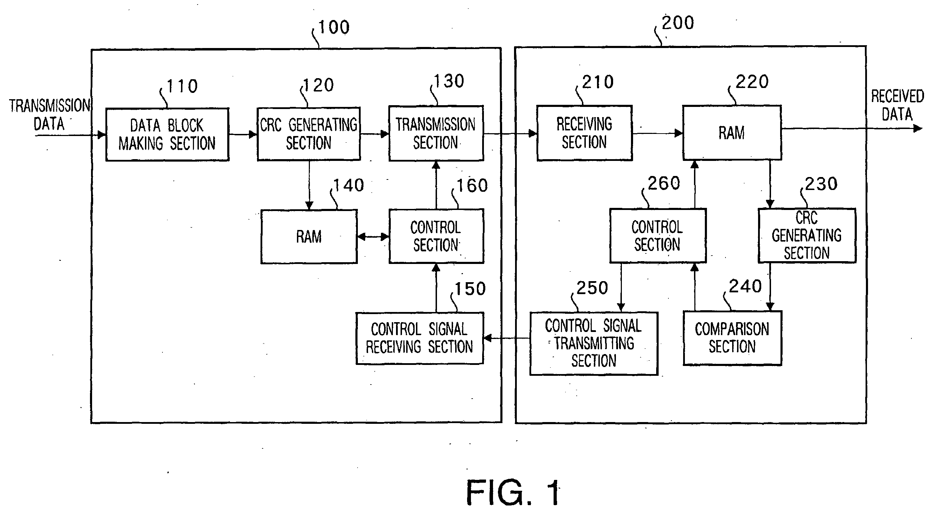

FIG. 1 is a block diagram showing a configuration of the transmitting apparatus and receiving apparatus according to Embodiment 1 of the present invention. Transmitting apparatus 100 shown in FIG. 1 comprises data block making section 110, CRC generating section (error detection code generating section) 120, transmission section 130, RAM 140, control signal receiving section (information receiving section) 150, and control section 160.

Data block making section 110 makes data blocks by dividing transmission data into blocks for every transmission unit. For each data block, CRC generating section 120 generates a CRC (Cyclic Redundancy Check) code, which is a cyclic redundancy code for error detection, using a predetermined generating polynomial. Examples of generating polynomials for CRC codes are given, for instance, in "3GPP Technical Specification TS25.212.". Transmission section 130 multiplexes the CRC code generated in CRC generating section 120 upon the data block made in data block making section 110, which is then transmitted. RAM 140 is a buffer (memory circuit) that memorizes data on a temporary basis, and accordingly temporarily memorizes the data block made in data block making section 110 and the CRC code generated in CRC generating section 120. Control signal receiving section 150 receives a control signal transmitted from receiving apparatus 200 to identify the next needed data block. Control section 160 instructs transmission section 130 to send the next data block when the control signal received in control signal receiving section 150 is one that requests the next data, or, when the control signal is one that requests retransmission, instructs transmission section 130 to retransmit the data block and CRC code memorized in RAM 140.

Next, receiving apparatus 200 comprises receiving section 210, RAM (memory circuit) 220, CRC generating section (error detection code generating section) 230, comparison section 240, control signal transmitting section 250, and control section 260.

Receiving section 210 receives the data block and CRC code transmitted from transmitting apparatus 100. RAM 220 temporarily memorizes the data block received in receiving section 210. From the data block memorized in RAM 220, CRC generating section 230 generates a CRC code using the same generating polynomial used in CRC generating section 120 of transmitting apparatus 100. Comparison section 240 draws a comparison between the CRC code received in receiving section 210 and the CRC code generated in CRC generating section 230, and outputs the result thereof to control section 260. Based on instructions from control section 260, which will be describe later, control signal transmitting section 250 transmits a control signal that identifies the next needed data block.

If the comparison result from comparison section 240 proves the CRC code received in receiving section 210 and the CRC code generated in CRC generating section 230 the same, control section 260 instructs control signal transmitting section 250 to transmit a signal in request of the next data block, and meantime erases the data block memorized in RAM 220 to make the above data block the received data. If the CRC code received in receiving section 210 and the CRC code generated in CRC generating section 230 do not match, control section 260 instructs control signal transmitting section 250 to transmit a signal that requests to retransmit the data block and meantime erases the oldest of the data blocks memorized in RAM 220 when the number of times two CRC codes do not match reaches a certain level.

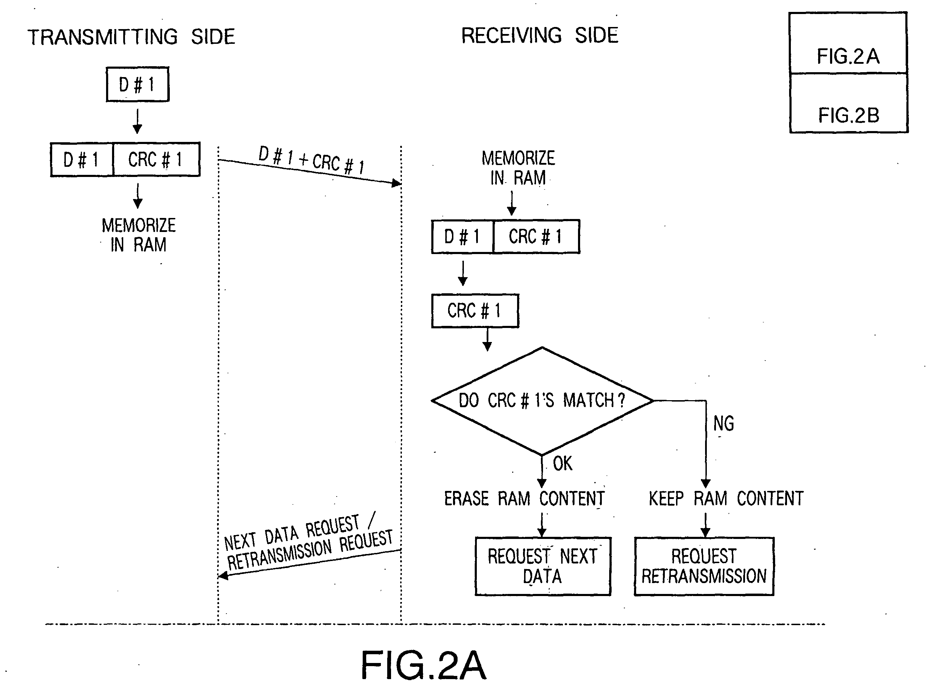

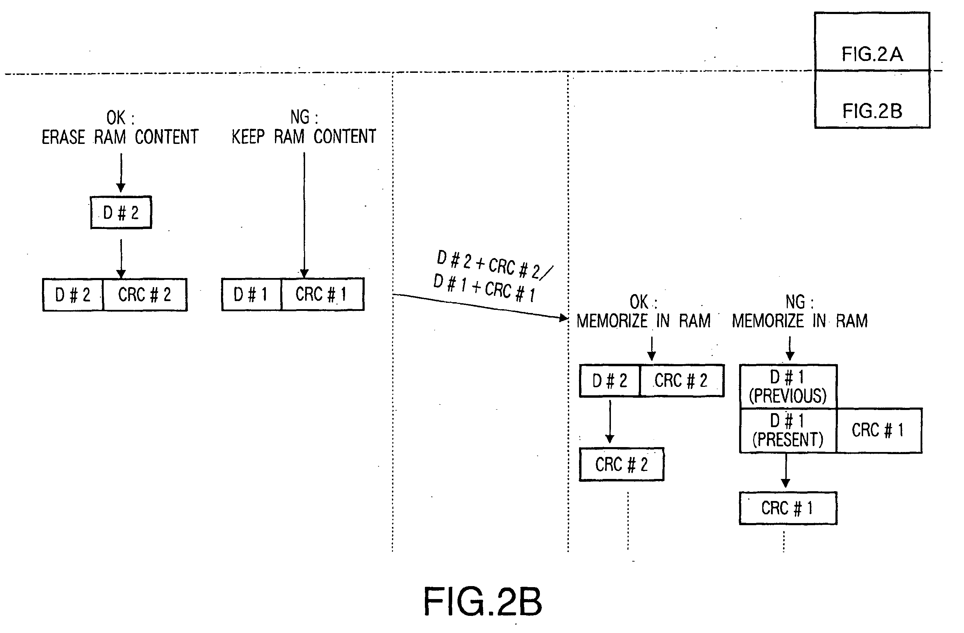

Next, the operation of a transmitting apparatus and a receiving apparatus having the above configurations willbe described with reference to the sequence diagrams of FIG. 2A and FIG. 2B.

First, in transmitting apparatus 100, and more particularly in data block making section 110, data block D#1 that is going to be sent first is made from transmission data. Then in CRC generating section 120, from a predetermined generating polynomial, CRC code #1 is generated, which is a cyclic redundancy code in accordance with data block D#1. Now, data block D#1 and CRC code #1 generated above are memorized in RAM 140, and meantime CRC code #1 is multiplexed upon data block D#1, and transmitted to receiving apparatus 200 through transmitting section 130.

In receiving apparatus 200, more particularly in receiving section 210, data block D#1 and CRC code #1 are received, and the received data block D#1 is memorized in RAM 220. In CRC generating section 230, another CRC code #1 is generated from data block D#1 memorized in RAM 220, using the same predetermined generating polynomial as in CRC generating section 120. A comparison is drawn in comparison section 240 between the CRC code #1 generated above and the CRC code #1 received with data block #1 in receiving section 210.

If the result of this comparison proves the two CRC code #1's the same, control section 260 judges that the data block D#1 received in receiving section 210 has no error, instructs control signal transmitting section 250 to transmit a signal that requests to transmit the next data block D#2, and erases the data block, D#1 memorized in RAM 220.

On the other hand, when the two CRC code #1's do not match, control section 260 keeps the number of times the comparison proves two CRC code #1's different. When the number reaches a certain level, the oldest of the data block D#1's memorized in RAM 220 is erased. When the number is below this level, the content in RAM 220 is kept. Furthermore, when two CRC code #1's vary, control section 260 judges that the data block D#1 received in receiving section 210 has error, and instructs control signal transmitting section 250 to transmit a signal to request to retransmit data block D#1. In response to instructions from control section 260, control signal transmitting section 250 transmits the control signal to transmitting apparatus 100.

The control signal is received in control signal receiving section 150, and then output to control section 160. When this output signal is one in request of the next data block D#2, control section 160 erases data block D#1 and CRC code #1 memorized in RAM 140, and transmission section 130 transmits data block D#2 made in data block making section 110 and CRC code #2 generated in CRC generating section 120. On the other hand, when the above output signal is one in request of retransmission, control section 160 reads out data block D#1 and CRC code #1 memorized in RAM 140, which are then retransmitted through transmission section 130.

Then, as data block D#2 and CRC code #2 are received in receiving section 210 of receiving apparatus 200, similar to when data block D#1 and CRC code #1 are received, data block D#2 is memorized in RAM 220, CRC code #2 is generated in CRC generating section 230, and a comparison is drawn in comparison section 240 between the received CRC code #2 and the generated CRC code #2. If the result of the comparison proves these two CRC code #2's the same, a control signal is transmitted from control signal transmitting section 250 to request to transmit the next data block D#3. If the two CRC code #2's do not match, a control signalto request a retransmission of data block D#2 is transmitted.

When data block D#1 and CRC code #1 are received in receiving section 210 of receiving apparatus 200 again, data block D#1 is memorized in RAM 220, and, in CRC generating section 230, CRC code #1 is generated once again from the data that combines data block D#1 that is already memorized and the presently received data block D#1. Then a comparison is drawn between the received CRC code #1 and the generated CRC code #1. If the two CRC code #1's prove the same, data block D#1, deemed to be correct data with no error, is erased from RAM 220 by control section 260, and becomes the received data. If then data block D#1 is one retransmitted from transmission apparatus 100, by combining a number of data block D#1's when, for instance Hybrid-ARQ such as described in "3GPP Technical Report TR25.848" is used, received data with fewer errors can be obtained.

On the other hand, when the two CRC code #1's prove different, control section 260 keeps the number of times the result of comparison prove the two CRC code #1's different. When the number reaches a certain level, the oldest of data block D#1's memorized in RAM 220 is erased. If the number is below a certain level, the content of RAM 220 is kept. Thereafter, the above operations will be repeated until two CRC code #1's match.

Thus according to the transmitting apparatus and receiving apparatus of the present embodiment, after a data block is transmitted, no next data will be transmitted until the data above is received correctly, and, even when the number of times of retransmission grows, the oldest data block of the data blocks memorized in a RAM is erased so as to minimize the size of the RAM.

In addition, although the present embodiment is configured such that the oldest data block is erased from a RAM in the receiving apparatus when the number of times of retransmission grows, this should not be construed as limiting, and such configuration is also possible where SIR information to indicate the received quality of each received data block is memorized in the RAM, and the data block corresponding to the lowest SIR (i.e. having the greatest number of errors) is erased from RAM.

Furthermore, although the present embodiment is configured such that retransmission continues until a data block has no error, this should not be construed as limiting, and such configuration is also possible where a number of data blocks make a unit and a RAM capable of receiving a number of data blocks is used.

### (Embodiment 2)

One feature of Embodiment 2 is that when data is transmitted from a transmitting apparatus to a receiving apparatus, there is no appended CRC code, but instead, a CRC code is generated in the receiving apparatus and transmitted to the transmitting apparatus, and the validity/invalidity of transmission data is judged based on a comparison between a CRC code obtained first in the transmitting apparatus and a CRC code transmitted from the receiving apparatus.

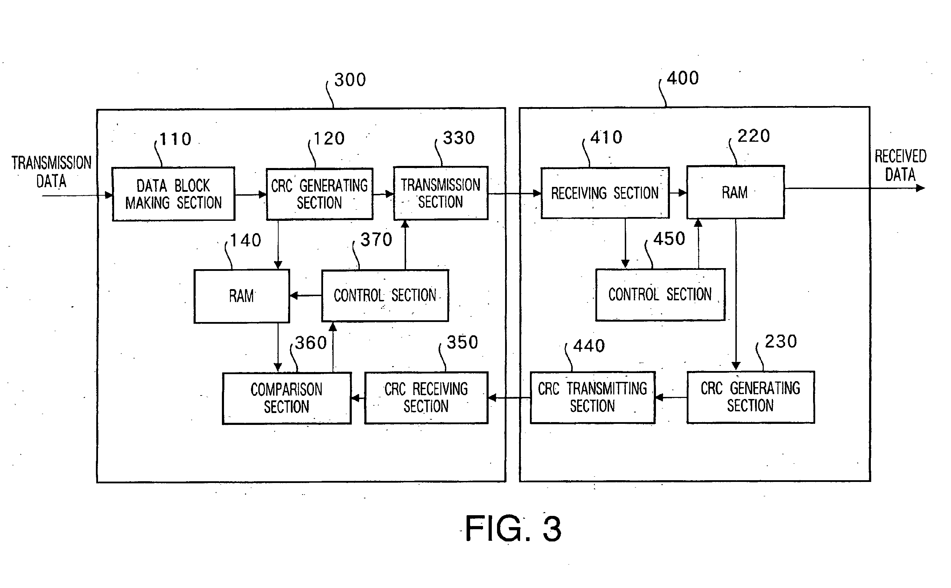

FIG. 3 is a block diagram showing a configuration of the transmitting apparatus and receiving apparatus according to Embodiment 2 of the present invention. Parts in FIG. 3 identical to those in FIG. 1 are assigned same codeswithout further explanations thereof. Transmitting apparatus 300 shown in FIG. 3 comprises data block making section 110, CRC generating section 120, transmission section 330, RAM 140, comparison section 360, CRC code receiving section (error detection code receiving section) 350, and control section 370.

Transmission section 330 transmits a data block. In addition, transmission section 330 transmits a judgment signal indicating OK/NG in accordance with instructions from control section 370, which will be described later. CRC code receiving section 350 receives a CRC code transmitted from receiving apparatus 400. Comparison section 360 draws a comparison between a CRC code memorized in RAM 140 and the CRC code received in CRC code receiving section 350, and outputs the result to control section 370. When the comparison result output from comparison section 360 proves the CRC code memorized in RAM 140 and the CRC code received in CRC code receiving section 350 the same, control section 370 instructs transmission section 330 to transmit an OK signal indicating the absence of error in the data block received in receiving apparatus 400, or instructs to transmit an NG signal in case the above two codes prove different.

Next, receiving apparatus 400 comprises receiving section 410, RAM 220, CRC generating section 230, CRC code transmitting section (error detection code transmitting section) 440, and control section 450.

Receiving section 410 receives a data block transmitted from transmitting apparatus 300. In addition, receiving section 410 receives a judgment signal indicating OK/NG, which is then output to control section 450. RAM 220 temporarily memorizes the data block received in receiving section 410. CRC code transmitting section 440 transmits a CRC code generated in CRC generating section 230 to transmitting apparatus 300. When receiving section 410 receives an OK signal, control section 450 erases the data block memorized in RAM 220, thereby making the data block the received data. On the other hand, when receiving section 410 receives an NG signal, control section 450 erases the oldest of the data blocks memorized in RAM 220, if the number of times of receiving an NG signal reaches a certain level.

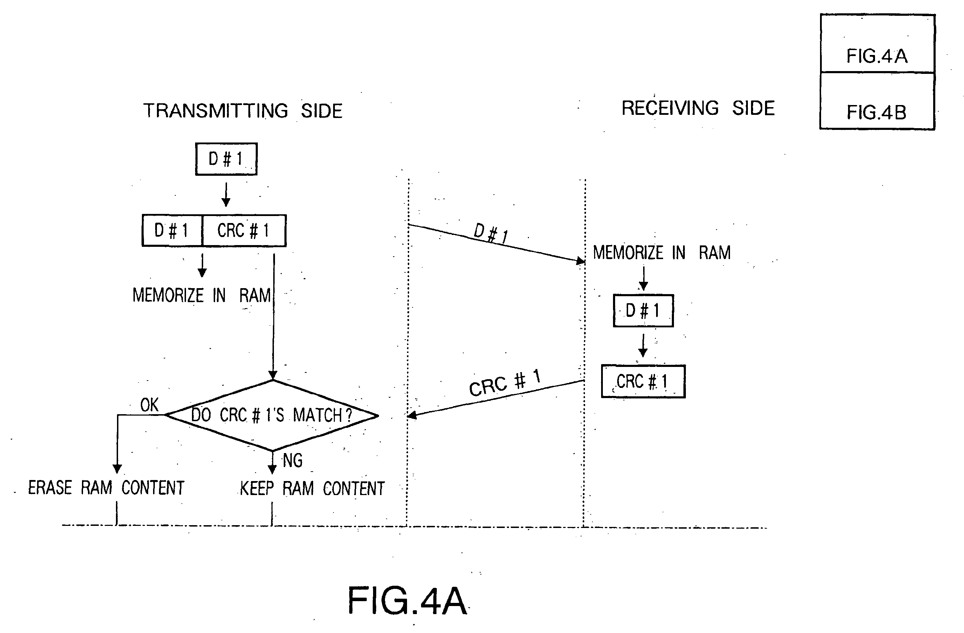

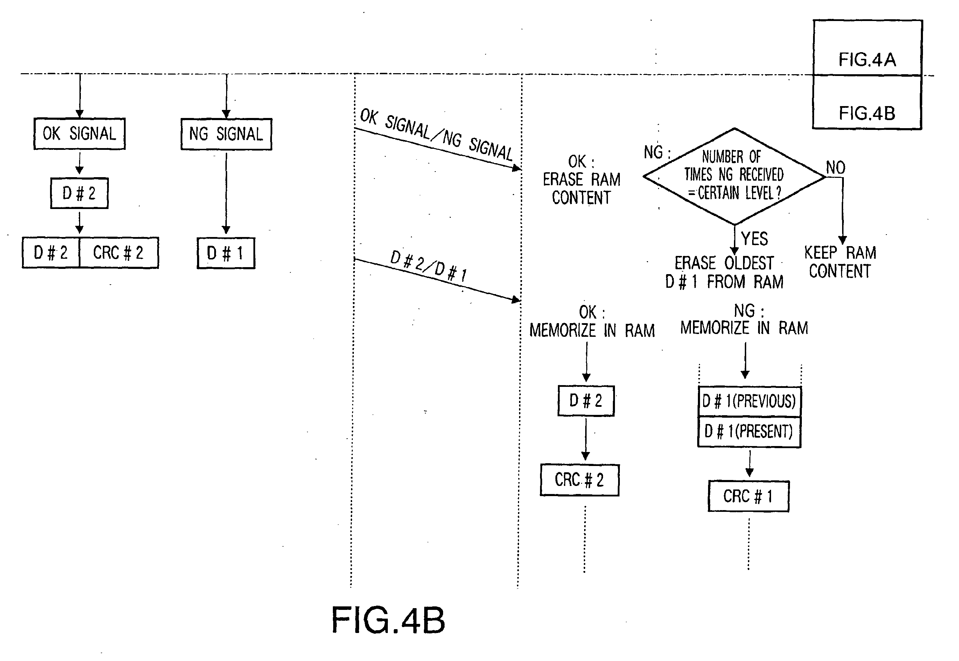

Next, the operation of a transmitting apparatus and a receiving apparatus having the above configurations will be described with reference to the sequence diagrams of FIG.4A and FIG.4B.

First, in transmitting apparatus 300, and more particularly in data block making section 110, data block D#1 that is to be sent first is made from transmission data. Then in CRC generating section 120, from a predetermined generating polynomial, CRC code #1 is generated, which is a cyclic redundancy code in accordance with data block D#1. Now, data block D#1 and CRC code #1 generated above are memorized in RAM 140, and data block D#1 alone is transmitted to receiving apparatus 400 through transmission section 330.

In receiving apparatus 400, more particularly in receiving section 410, data block D#1 is received, and the received data block D#1 is memorized in RAM 220. From the data block D#1 memorized in RAM 220, CRC code #1 is generated in CRC generating section 230, using the same predetermined generating polynomial as in CRC generating section 120. The generated CRC code #1 is transmitted to receiving apparatus 300 through CRC code transmitting section 440.

In transmitting apparatus 300, then, the CRC code #1 generated in CRC generating section 230 is received in CRC code receiving section 350, and a comparison is drawn between a CRC code #1 memorized in RAM 140 and the CRC code #1 received in CRC code receiving section 350.

If the result of this comparison proves the two CRC code #1's the same, control section 370 judges that receiving apparatus 400 has received the data block D#1 with no error, instructs transmission section 330 to transmit an OK signal, and erases the data block D#1 and CRC code #1 memorized in RAM 140.

On the other hand, when the two CRC code #1's do not match, control section 370 judges that there has been error in the data block D#1 received in receiving apparatus 400, and instructs transmission section 330 to transmit an NG signal. In response to instructions from control section 370, a judgment signal indicating OK/NG is transmitted from transmission section 330 to receiving apparatus 400.

The judgment signal indicating OK/NG is received in receiving section 410, and then output to control section 450. When an OK signal is output, data block D#1 memorized in RAM 220, deemed to be correct data with no error, is erased from RAM 220 by control section 450, and made the received data. If this data block D#1 is one retransmitted from transmission section 300, provided that RAM 220 already memorizes an error-containing data block D#1, by combining a number of data block D#1's when for instance Hybrid-ARQ is used, received data with fewer errors can be obtained.

When the signal received is an NG one, the number of times an NG signal is received is kept by control section 450. When the above number of reception reaches a certain level, the oldest of the data block D#1 memorized in RAM 220 is erased. When the above number of reception is below a certain level, the content of RAM 220 is kept.

Turning to transmitting apparatus 300, if the signal transmitted previously was an OK signal, data block D#2 that is subsequent to data block D#1 is transmitted from transmission section 330. If the previously transmitted signal was an NG signal, data block D#1 is transmitted again from transmitting section 330. When data block D#2 is received in receiving section 410 of receiving apparatus 400, similar to when the above data block D#1 was received, data block D#2 is memorized in RAM 220, CRC code #2 is generated in CRC generating section 230, and CRC code #2 is transmitted to transmitting apparatus 300 through CRC code transmitting section 440. On the other hand, when data block D#1 is received again in receiving section 410 of receiving apparatus 400, data block D#1 is memorized in RAM 220, and in CRC generating section230, CRC code #1 is generated once again from already memorized data block D#1 and the presently received data block D#1. CRC code #1 generated then is transmitted to transmitting apparatus 300 through CRC code transmitting section 440, and, in comparison section 360, once again compared to the CRC code #1 memorized in RAM 140. Thereafter, the above operations will be repeated until receiving section 410 receives an OK signal.

Thus according to the transmitting apparatus and receiving apparatus of the present embodiment, after a data block is transmitted, no next data will be transmitted until the data above is received correctly, and, even when the number of times of retransmission grows, the oldest data block of the data blocks memorized in a RAM is erased so as to minimize the size of the RAM.

In addition, although the present embodiment is configured such that the oldest data block is erased from a RAM in the receiving apparatus when the number of times of retransmission grows, this should not be construed as limiting, and such configuration is also possible where SIR information to indicate the received quality of each received data block is memorized in the RAM, and the data block corresponding to the lowest SIR (i.e. having the greatest number of errors) is erased from the RAM.

In addition, although the present embodiment is configured such that retransmission continues until a data block has no error, this should not be construed as limiting, and such configuration is also possible where a number of data blocks make a unit and a RAM capable of receiving a number of data blocks is used.

Furthermore, although the present embodiment is configured such that the transmitting apparatus transmits data blocks only to the receiving apparatus, this should not be construed as limiting, and such configuration is also possible where an error correction code such as block codes like a Hamming code, a BCH code, and a Reed-Solomon code, and a convolution code is appended upon transmission, and, in the receiving apparatus, an error detection code is generated from error-corrected data, so as to improve tolerance for errors and reduce the number of times of retransmitting data blocks.

### (Embodiment 3)

One feature of Embodiment 3 is that a data block is a bundle of data from the top to given data points, corresponding to each of which a number of CRC codes are respectively generated, so as to specify the location of an data error and retransmits the data corresponding to this location.

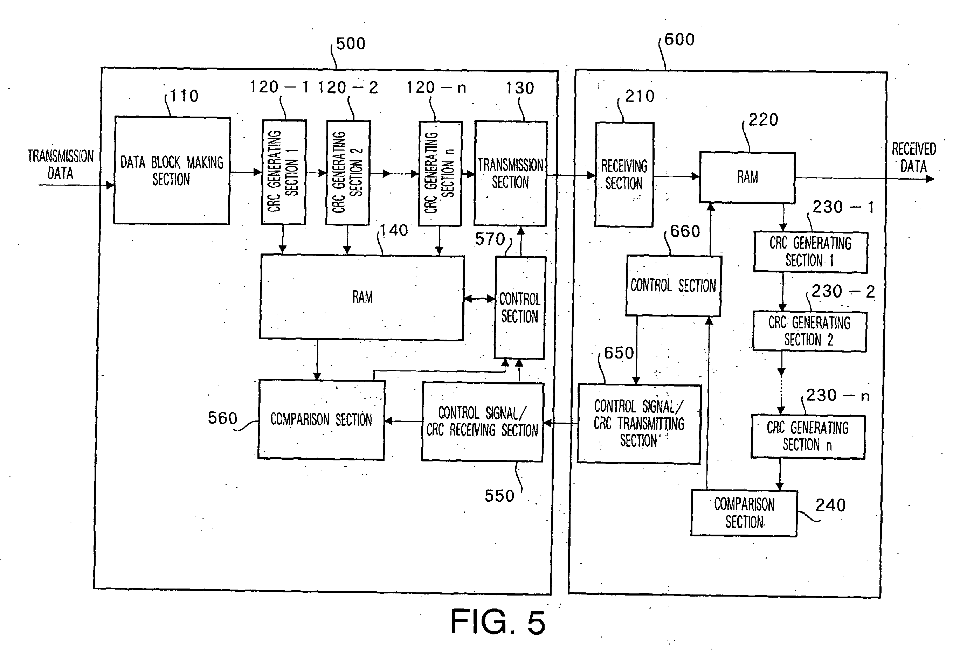

FIG. 5 is a block diagram showing a configuration of a transmitting apparatus and a receiving apparatus according to Embodiment 3 of the present invention. Parts in FIG. 5 identical to those in FIG. 1 are assigned the same codes without further explanations thereof. Transmitting apparatus 500 comprises data block making section 110, CRC generating sections 120-1∼n, transmitting section 130, RAM 140, control signal/CRC code receiving section 550, comparison section 560, and control section 570.

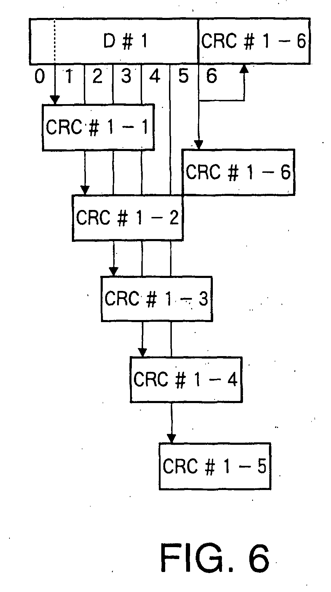

CRC generating sections 120-1∼n divide a data block into n, and corresponding to each from the top to the respective divided units, a CRC is generated (FIG. 6 shows a case where n=6). Transmission section 130 multiplexes the CRC code for the entire data generated in CRC generating section 120-n over the data block made in data block making section 110 and transmits the data block. RAM 140 temporarily memorizes the data block made in data block making section 110 and the CRC codes generated in CRC generating sections 120-1∼n. From receiving apparatus 600, control signal/CRC code receiving section 550 receives a control signal that identifies the next needed data block or a plurality of CRC codes corresponding to each from the top of the data block to the respective divided units. When control signal/CRC code receiving section 550 receives a plurality of CRC codes corresponding to each from the top of the data block to the respective divided units, comparison section 560 draws a comparison with the corresponding CRC codes memorized in RAM 140 respectively, and outputs the results to control section 570.

When control signal/CRC code receiving section 550 receives a control signal in request of the next data, control section 570 instructs transmission section 130 to transmit the next data. Referring to the result of comparison from comparison section 560, control section 570 specifies a position in the data where an error is detected, reads out from the corresponding data block only the portion in which the error is detected, and transmits it to receiving apparatus 600 through transmission section 130.

Next, receiving apparatus 600 comprises receiving section 210, RAM 220, CRC generating sections 230-1∼ n, comparison section 240, control signal/CRC code transmitting section 650, and control section 660.

From data block memorized in RAM 220, CRC generating sections 230-1∼n divide a data block into n, and generates a CRC code corresponding to each from the top of the data block to the respective divided units. Comparison section 240 draws a comparison between a CRC code received in receiving section 210 and the CRC code for the entire data generated in CRC generating section 230-n, and outputs the result to control section 660. Following the instructions from control section 660 which will be described later, control signal/CRC code transmitting section 650 transmits a control signal to identify the next needed data block or transmits a plurality of CRC codes corresponding from the top of the data block to the respective divided units.

When the result of the comparison from comparison section 240 proves the CRC code received in receiving section 210 and the CRC code for the entire data generated in CRC generating section 230-n the same, control section 660 instructs control signal/CRC code transmitting section 650 to transmit a signal in request of the next data block, and meantime erases the data block memorized in RAM 220, thereby making this data block the received data. On the other hand, when the CRC code received in receiving section 210 and the CRC code generated in CRC generating section 230-n do not match, control section 660 instructs control signal/CRC code transmitting section 650 to transmit all the CRC codes generated in CRC generating sections 230-1∼n.

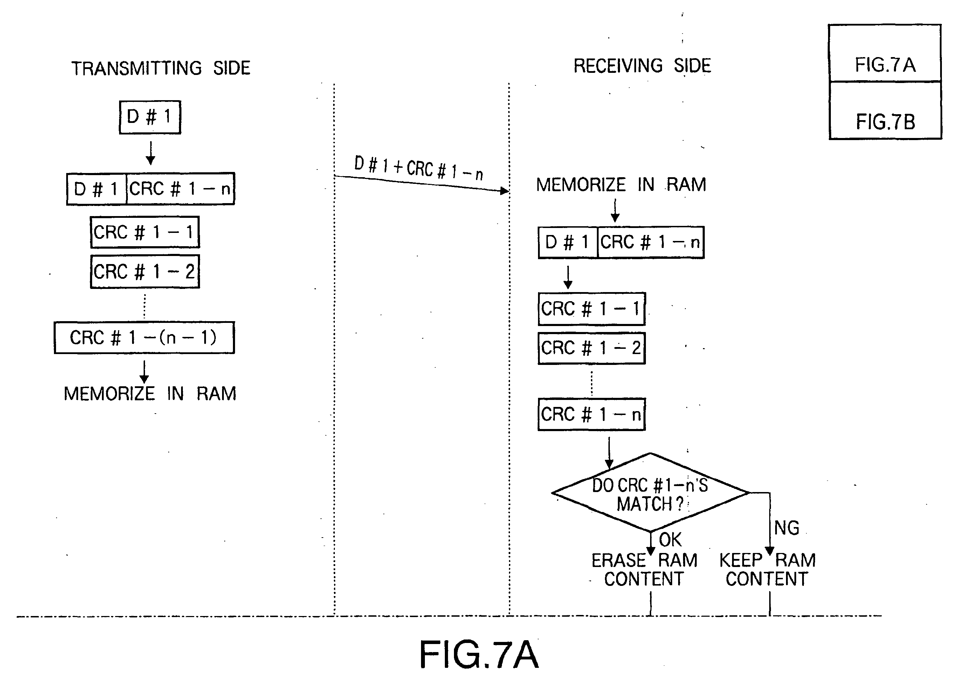

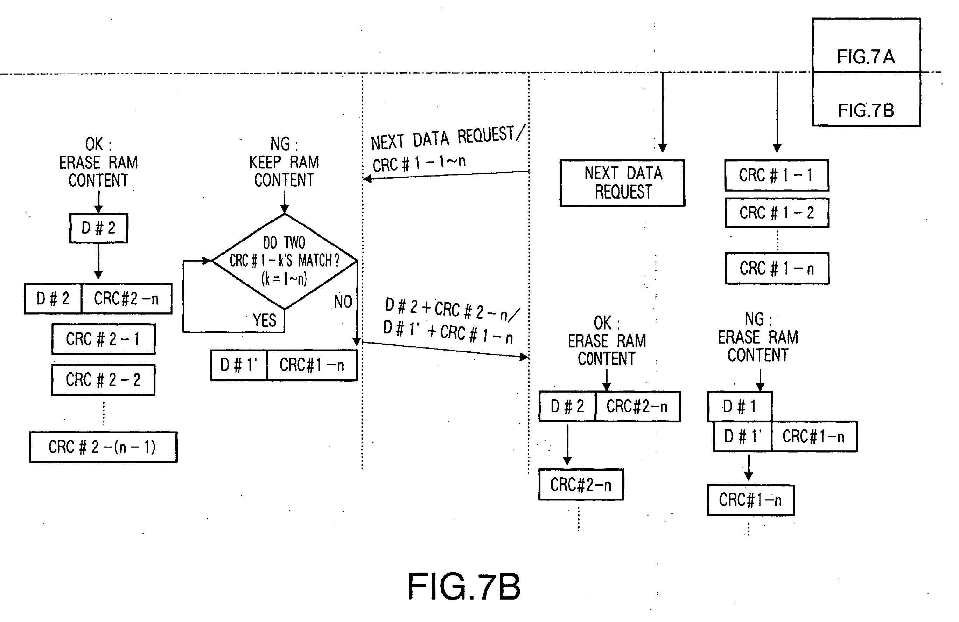

Next, the operation of a transmitting apparatus and a receiving apparatus having the above configuration will be described with reference to the sequence diagrams of FIG. 7A and FIG. 7B.

First, in transmitting apparatus 500, and more particularly in data block,making section 110, a data block D#1 that is to be sent first is made from transmission data. Then in CRC generating sections 120-1∼n, the data block D#1 is divided into n, corresponding to the top to the respective divided units of which CRC codes #1-1 ∼n are generated by a predetermined polynomial, which are cyclic redundancy codes. Now, the data block D#1 and CRC codes #1-1∼n made above are memorized in RAM 140, and meantime, a CRC code #1-n, which is the CRC code for the entire data block, is multiplexed over the data block D#1, and then transmitted to receiving apparatus 600 through transmission section 130.

Then in receiving apparatus 600, more particularly in receiving section 210, the data block D#1 and CRC code #1-n are received, whereupon the data block D#1 is memorized in RAM 220. In CRC generating sections 230-1 ∼n, by a predetermined polynomial, CRC codes #1-1∼n are generated that correspond to each from the top to the respective divided units of the data block D#1 divided into n. A comparison is drawn in comparison section 240 between the CRC code #1-n generated above and the CRC code #1-n received with data block D#1 in receiving section 210.

If the result of this comparison proves these two CRC code #1-n' s the same, control section 660 judges that data block D#1 received in receiving section 210 has no error, instructs control signal/CRC code transmitting section 650 to transmit a control signal that requests to transmit the next data block D#2, and erases the data block D#1 memorized in RAM 220.

On the other hand, if the two CRC code #1-n's do not match, an instruction is given to control srignal/CRC code transmitting section 650 to transmit all the CRC codes generated in CRC generating sections 230-1∼n. In response to the instruction from control section 660, a control signal or a plurality of CRC codes are transmitted from control signal/CRC code transmitting section 650 to transmitting apparatus 500.

When a control signal is transmitted to request to transmit the next data block D#2, the control signal is received in control signal/CRC code receiving section 550, and then output to control section 570. Receiving the output signal, control section 570 erases the data block D#1 and CRC codes #1-1∼n memorized in RAM 140, and transmitting section 130 transmits a data block D#2 made in data block making section 110 and a CRC code #2-n generated in CRC generating section 120-n.

When all the CRC codes generated in CRC generating sections 230-1∼n are transmitted, these CRC codes are all received in control signal/CRC code generating section 550, and a comparison is drawn in comparison section 560 between the received CRC codes #1-1∼n and the corresponding CRC codes #1-1∼n that are read out of RAM 140. If this comparison proves the CRC codes after CRC code #1-k different, this means that the data portion from the bottom to k/n of the corresponding data block D#1 has error. So, control section 570 reads the data portion D#1' corresponding to k/n from the bottom of the corresponding data block D#1, and a CRC code #1-n from RAM 140, and retransmits these through transmission section 130.

When the.data block D#2 and CRC code #2-n are received in receiving section 210 of receiving apparatus 600, as when the data block D#1 and CRC code #1-n are received, the data block D#2 is memorized in RAM 220, CRC codes #2-1∼n are generated in CRC code generation sections 230-1∼n, and a comparison is drawn between the received CRC code #2-n and the generated CRC code #2-n in comparison section 240. If the result of the comparison proves the two CRC code #2-n's the same, a control signal that requests to transmit the next data block #3 is transmitted from control signal/CRC code transmitting section 650. If the CRC code #2-n's vary, the CRC codes #2-1∼n generated in CRC generating sections 230-1∼n are transmitted.

When the partial data D#1' and CRC code #1-n are received in receiving section 210 of receiving section 600, the partial data D#1' is memorized in RAM 220, and once again CRC codes #1-1∼n are generated in CRC generating sections 230-1∼n from the data in which the data block D#1 already memorized and the partial data D#1' presently received are combined. A comparison is drawn between the received CRC code #1-n and the generated CRC code #1-1∼n. When the two CRC code #1-n's prove the same, data that includes the data block D#1 and the partial data D#1' memorized in RAM 220 are correct data without error, hence the received data, and control section 660 erases the data block D#1 and the partial data D#1' memorized in RAM 220.

When the two CRC code #1-n's do not match, control section 660 sends out an instruction to transmit all the CRC codes generated in CRC generating sections 230-1 ∼n, and the data portion in which an error is detected is estimated by comparison section 560 of receiving apparatus 500, and the data corresponding to this portion and a CRC code #1-n are transmitted. Thereafter, the above operation will be repeated until the result of comparison in comparison section 240 proves two CRC codes #1-n's the same.

Thus according to the transmitting apparatus and receiving apparatus of the present embodiment, after one data block is transmitted, no next data block will be transmitted until the above data is received correctly, so as to minimize the RAM size. Furthermore, a portion in which an error is detected can be estimated so as to retransmit the data corresponding to the portion, thereby improving the efficiency of transmission.

Although the present embodiment is configured such that a data block error is detected in the receiving apparatus, this should not be construed as limiting, and such configuration is also possible where an error in a data block is detected such that error detection codes generated in the receiving apparatus are all sent to the transmitting apparatus and, in the transmitting apparatus, compared to error detection codes memorized therein from prior to the transmission of the data block.

As explained above, with the present invention, the buffer size can be minimized without increasing the volume of data temporarily memorized in receiving apparatus.

This application is based on Japanese Patent Application No. 2001-214571 filed on July 13, 2001, entire content of which is expressly incorporated by reference herein.

### INDUSTRIAL APPLICABILITY

The present invention is applicable to transmitting apparatus and receiving apparatus that detect or correct data errors in data communication using error detection codes or error correction codes such as CRC codes.

## Claims

1. A transmitting apparatus comprising:
a generating section that generates an error detection code from a data block, where transmission data is made into blocks for every unit of transmission;
a memory section that memorizes the data block and the generated error detection code on a temporary basis; a transmission section that transmits the data block;
an obtaining section that obtains information indicating whether or not the transmitted data block has an error; and
a control section that operates in accordance with the obtained information, performing a control to retransmit the data block memorized in said memory section when there is an error in the transmitted data block, and, when there is no error, performing a control to erase a content in said memory section and transmit a next data block.

2. A transmitting apparatus comprising:
a data block memory section that memorizes a data block on a temporary basis, where transmission data is made into blocks for every unit of transmission;
an error detection code generating section that generates an error detection code from the data block;
an error detection code memory section that memorizes the generated error detection code on a temporary basis;
a transmission section that transmits the data block;
an information obtaining section that obtains information indicating whether or not the transmitted data block has an error; and
a control section that operates in accordance with the information obtained in said information obtaining section, performing a control to retransmit the data block memorized in said data block memory section when there is an error in the transmitted data block, and, when there is no error, performing a control to erase a content in said data block memory section and said error detection code memory section and transmit a next data block.

3. The transmitting apparatus according to claim 2,
wherein said information obtaining section further comprises an information receiving section that receives the information indicating whether or not the data block has an error; and
wherein said transmission section transmits the data block made in said data block making section and the error detection code generated in said error detection code generating section.

4. The transmitting apparatus according to claim 2, wherein said information obtaining section comprises:
an error detection code receiving section that receives an error detection code generated on a receiving side by a same method as in said error detection code generating section; and
an information detection section that compares the error detection code memorized in said error detection code memory section and the error detection code received in said error detection code receiving section, and detects the information that indicates whether or not the data block has an error.

5. The transmitting apparatus according to claim 2, wherein said error detection code generating section generates the error detection code for each part of the data block.

6. The transmitting apparatus according to claim 2, wherein said error detection code generating section generates a CRC code.

7. A receiving apparatus comprising:
a receiving section that receives a data block;
a memory section that memorizes the received data block on a temporary basis;
an error detection code generating section that, referring to the data block memorized in said memory section, generates an error detection code by a same method as in a transmitting side;
an information obtaining section that uses the generated error detection code and obtains information indicating whether or not the data block memorized in said memory section has an error; and
a control section that, when the number of times said information obtaining section detects the error in the data block reaches a predetermined number of times, performs a control of data block input and/or output with respect to said memory section.

8. The receiving apparatus according to claim 7,
wherein said receiving section receives the data block containing the error detection code;
wherein said information obtaining section compares the error detection code received in said receiving section and the error detection code generated in said error detection code generating section to detect the error in the data block memorized in said memory section;
wherein said control section:
when there is no error in the data block memorized in said memory section, erases said data block and makes a request to a transmitting side to transmit a next data block; and
when there is an error in the data block memorized in said memory section, keeps the number of times the error is detected,
when the number of times the error is detected is below a predetermined number of times, makes a request to the transmitting side to retransmit the data block; and
when the number of times the error is detected reaches the predetermined number of times, erases an oldest one of error containing data blocks stored in said memory section.

9. The receiving apparatus according to claim 7,
wherein said information obtaining section transmits the error detection code generated in said error detection code generating section to a transmitting side;
wherein said receiving section receives a judgment signal that indicates the result of detection at the transmitting side as to whether or not there is an error;
wherein said control section operates in accordance with the judgment signal received in said receiving section, erasing the data block in the data block memorized in said memory section when there is no error in said data block, and, when there is an error in the data block memorized in said memory section, keeping the number of times the error is detected; and erases an oldest one of error containing data blocks stored in said memory section when the number of times the error is detected reaches a predetermined number of times.

10. The receiving apparatus according to claim 7, wherein said controlling section combines data blocks in which error has been detected and which are memorized in said memory section, to obtain received data.

11. The receiving apparatus according to claim 7, wherein said error detection code generating section generates an error detection code for every part of data block.

12. The receiving apparatus according to claim 7, wherein said error detection code generating section generates a CRC code.

13. A transmission method, comprising the steps of:
making and memorizing a data block, where transmission data is made into blocks for every unit of transmission;
generating and memorizing an error detection code of the data block;
transmitting the data block; and
obtaining information that indicates whether or not there is an error in the data block stored on a temporary basis at a receiving side; and
retransmitting the memorized data block when there is an error according to the obtained information, and, when there is no error, erasing the memorized data block and error detection code and transmitting the data block that is to be sent next.

14. A reception method comprising the steps of:
receiving and memorizing a data block;
referring to the memorized data block and generating an error detection code by a same method used at a transmitting side;
obtaining information indicating whether or not the memorized data block has an error by using the generated error detection code;
controlling, when the number of times the error is detected in the data block reaches a predetermined number of times, input and/or output of data block.

15. A data transmission method for use of a mobile communication system comprising a transmitting apparatus and a receiving apparatus, the method comprising the steps of:
in said transmitting apparatus, making and memorizing a data block, where transmission data is made into blocks for every unit of transmission;
in said transmitting apparatus, generating and memorizing an error detection code from the data block;
in said transmitting apparatus, transmitting the data block and the error detection code to said receiving apparatus;
in said receiving apparatus, receiving and memorizing the data block and the error detection code;
in said receiving apparatus, referring to the data block memorized in said receiving apparatus and generating the error detection code by a same method as in said transmitting apparatus;
in said receiving apparatus, detecting an error of the data block memorized in said receiving apparatus by comparing the received error detection code and the generated error detection code; and
in said receiving apparatus, when there is no error in the data block memorized in said receiving apparatus, erasing said data block and making a request to said transmitting apparatus to transmit a next data block, and, when there is an error in the data block memorized in said receiving apparatus, keeping the number of times the error is detected and making a request to said transmitting apparatus to retransmit the data block when the number of times the error is detected is below a predetermined number of times, and erasing an oldest one of error containing data blocks stored in said receiving apparatus when the number of times the error is detected reaches the predetermined number of times.

16. A data transmission method for use of a mobile communication system comprising a transmitting apparatus and a receiving apparatus, the method comprising the steps of:
in said transmitting apparatus, making and memorizing a data block, where transmission data is made into blocks for every unit of transmission;
in said transmitting apparatus, generating and memorizing an error detection code from the data block;
in said transmitting apparatus, transmitting the data block to said receiving apparatus;
in said receiving apparatus, receiving and memorizing the data block;
in said receiving apparatus, referring to the data block memorized in said receiving apparatus and generating the error detection code by a same method as in said transmitting apparatus;
in said receiving apparatus, transmitting the generated error detection code to said transmitting apparatus;
in said transmitting apparatus, receiving the error detection code;
in said transmitting apparatus, detecting information that indicates whether or not there is an error in the data block by comparing the received error detection code and the error detection code memorized in said transmitting apparatus; and
in said transmitting apparatus, when there is an error according to the detected information, retransmitting the data block memorized in said transmitting apparatus, and, when there is no error, erasing the data block and the error detection code memorized in said transmitting apparatus and transmitting the data block that is to be sent next.

17. A data transmitting apparatus comprising the transmitting apparatus of claim 1.

18. A data transmitting apparatus comprising the transmitting apparatus of claim 2.

19. A data transmitting apparatus comprising the receiving apparatus of claim 7.
